# EUROPEAN PATENT SPECIFICATION

(11) **EP 2 243 844 B1**
(45) Date of publication and mention of the grant of the patent: **19.12.2012**
(21) Application number: 09703053.0
(22) Date of filing: 16.01.2009
(51) Int. Cl.: C21B 3/04, C22B 1/245, C22B 7/02

(54) **IMPROVED METHOD FOR RECYCLING STEEL-PLANT DUST**
VERBESSERTES VERFAHREN ZUR REZYKLIERUNG VON STAHLWERKSSTAUB
PROCÉDÉ AMÉLIORÉ POUR LE RECYCLAGE DES POUDRES D'ACIER

(30) Priority: 18.01.2008 ES 200800122
(43) Date of publication of application: 27.10.2010
(73) Proprietor: Hera-Amasa S.a., 08034 Barcelona (ES)
(72) Inventor: UGARTE SIERRA, Alberto, E-08034 Barcelona (ES)
(74) Representative: Carpintero Lopez, Francisco
(86) International application number: PCT/ES2009/000021
(87) International publication number: WO 2009/090288

(56) References cited:
- EP-A- 1 439 237
- CN-A- 101 157 980
- ES-A1- 2 143 956
- ES-A1- 2 146 539
- GB-A- 2 024 251
- US-A- 3 770 416
- KAAS W ET AL: "Erzeugung und Verarbeitung armierter Filterstaubbriketts aus der Edelstahlerzeugung" STAHL UND EISEN, VERLAG STAHLEISEN, DUSSELDORF, DE, vol. 7, no. 104, 2 April 1984 (1984-04-02), pages 357-362, XP002079087 ISSN: 0340-4803

## Description

### Object of the Invention

As expressed in the title of the present specification, the invention relates to an improved process for recycling steel dusts, providing a series of new features substantially improving said process, in order to achieve a greater efficiency in its exploitation.

More specifically, the object of the invention consists of a process by means of which the dusts coming from steel plant fume collection systems, mixed and homogenised with a carbon-based reducer compound, an organic bonding agent and water, are transformed into small portions of pressed material, specifically briquettes, for their reintroduction in the actual steel plant furnace and obtaining in the fume purification systems a new material which because of its characteristics can be used as a raw material by the zinc and lead metallurgic industry after the application of the suitable process. Said process has a series of improvements, among others specifically in its curing phase, intended to increase the homogeneity of said briquettes and consequently increase its efficiency and improve its exploitation.

### Field of Application

The field of application of the present invention is within the iron and steel industry, and specifically in the exploitation and recycling of steel dusts.

### Background of the Invention

Currently and as reference to the state of the art, it must be mentioned that the recycling of steel dust by reintroducing it, once treated, in the electric arc furnace is known, for which said dust, which substantially consists of oxides, is accompanied with a very fine-grain carbon-based reducer, such that each steel dust particle and each reducer compound particle mutually and spatially surround one another, forming a tough solid, by means using a bonding agent, said solid being able to adopt different shapes, such as balls, pellets, tablets, prisms (briquettes) etc.

In this sense, the actual applicant is already the co-proprietor of the invention patent with application number 200300044 extended as a European Patent with the number 03380210.9 EP-A1-1439237; relating to a "Recycling process for electric arc furnace dust and product obtained therefrom", which essentially consists of the transfer of the dust coming from the fume collection systems of an electric arc furnace towards a silo in which it settles. It is metered and introduced together with a very fine-grain carbon-based reducer and a polymerizable and polyalcohol-based bonding agent in a mixer to which water is furthermore added, the bonding agent forming with the water a gel film on the particles, the mixture obtained being pressed until achieving the suitable density for forming a briquette or any other shape which must be subjected to a conventional curing phase to be able to be used by being dumped again in the furnace.

Both in said invention as in other known systems, little or no emphasis is placed on the mentioned curing process, the maturation of the briquettes being a critical point in the process for the production thereof, the improvement of said process being one of the main objectives of the present invention.

Although the polyalcohol which is used as a bonding agent confers a suitable resistance to the briquettes, it does not occur immediately. The process for hardening this bonding agent requires the elimination of the surplus water necessary for the generation of the gel and its correct distribution over the entire material.

The briquettes obtained with the systems known up until now are therefore weak and are easily powdered. It is therefore necessary to include processes favouring this reaction, since if the briquettes are not well matured, the handling deteriorates them, producing fines. If briquettes which are moist and have fines are introduced in the addition system for adding to the furnace, multiple problems occur because the material adheres to the elements of the environment, causing jams and plugging. Furthermore, if the material is broken up, the efficiency of the concentration is reduced, because these fines are entrained by the suction currents and do not react (the reduction reaction of the material occurs when it is introduced in the melt of the furnace, approx. 1600ºC).

### Description of the Invention

The improved process for recycling steel dusts proposed by the present invention thus represents an outstanding novelty within its field of application, satisfactorily achieving the objectives indicated as suitable for responding to the problems described above.

To that end, the proposed invention conventionally consists specifically of the transfer of the dust coming from steel plant fume collection systems towards a silo in which it settles.

A metering system adds the established amounts of dust and very fine-grain carbon-based reducer dust, having a mixer in which a polymerizable polyalcohol and water-based bonding agent forming a gel film on the particles is furthermore added, said bonding agent being introduced by means of a high-pressure pump in the flow of water before its entrance in the mixer.

It should be emphasised that the bonding agent is metered in about 0.06% over the weight of the base material used, and the amount of water varies according to the environmental conditions of the moment, the physical appearance of the dust and its composition. This is due to the fact that the latter can be finer or spongier or have a different component making it necessary to add more or less water, varying the addition between 90 and 120 litres. The amount is determined by means of trial and error, such that when a mixture starting to have deficiencies due to the lack or excess of water is obtained, it is corrected in the following batch. The evolution of the water needs is normally gradual, whereby the amount of material obtained can be maintained within acceptable margins.

It is important to emphasise that one of the aspects of the invention improving the process consists of the fact that water which is incorporated for making the mixture has been heated so that it is at a temperature of between 40 and 60ºC, instead of being at the temperature of the tank as occurs with the conventional process, which was at room temperature or below.

With said increase in the water temperature the temperature of the material is already increased at the exit of the mixer, which material in this passage is at about 70-90ºC, a much quicker bonding reaction occurring which obviously improves the maturation process.

The following step of the process consists of pressing the obtained mixture until achieving the suitable density for forming the briquettes (or any other shape), the size of which is given by the dimensions of the impressions of the cylinders of the briquetting press, having to be large enough to cross the slag layer of the furnace, but not so large that they are easily broken by the impacts. Their dimensions will therefore be approximately and preferably 5 x 4 x 1.5 cm and their size evidently affects the maturation time needs.

According to another of the improvements of the process of the invention, once the briquettes have been obtained, and after passing through a sieve in which the dust or remains of non-compacted material are returned to the regulation hopper acting as a storage before the pressing phase, said briquettes are circulated through a maturation tunnel through which there circulates hot air insufflated therein at a temperature of between 80 and 100ºC, such that the surfaces of the briquettes reaches a temperature sufficient for the bonding agent to be consolidated and form a "skin" preventing the friction with the environment from lifting material from their surface.

Finally, after the curing line, the briquettes pass through a second sieve, with an opening of 20% of the size of the briquette to discard those pieces which may have come off after the first sieving, since said pieces can cause problems in the handling systems, being, in some cases, light enough to be entrained by the suction of the furnace.

The briquettes are subsequently deposited in containers with unit heaters in which they must rest for between 1.5 and 2 hours, then being transferred to a storage in which they must remain for at least 24 hours before being able to be used.

The curing system thus described advantageously involves the briquette losing most of the excess moisture that it has before its handling occurs, such that no breakages generating fines occur, since the latter do not cross the slag layer of the furnace as they do not weight enough, remaining in the slag or being entrained together with the fumes). The fines represent a loss of yield of the enriching process and furthermore create multiple problems in the handling systems.

It should be pointed out that since the necessary amount of briquettes which has to be added to the furnace in each pouring is calculated such that the zinc concentration of the material resulting from the enrichment (which is the result of the introduction of the briquettes) is 40-45%, its use as zinc ore becomes viable.

The improved process for recycling steel dusts herein proposed represents an outstanding innovation in structural and constitutive features which were unknown up until now, reasons which combined with its practical usefulness, provide it with the necessary basis for the exclusivity privilege which is applied for.

### Description of the Drawings

To complement the description being made and for the purpose of aiding to better understand the features of the invention, a set of drawings is attached as an integral part of the present specification, in which the following has been depicted with an illustrative and non-limiting character:

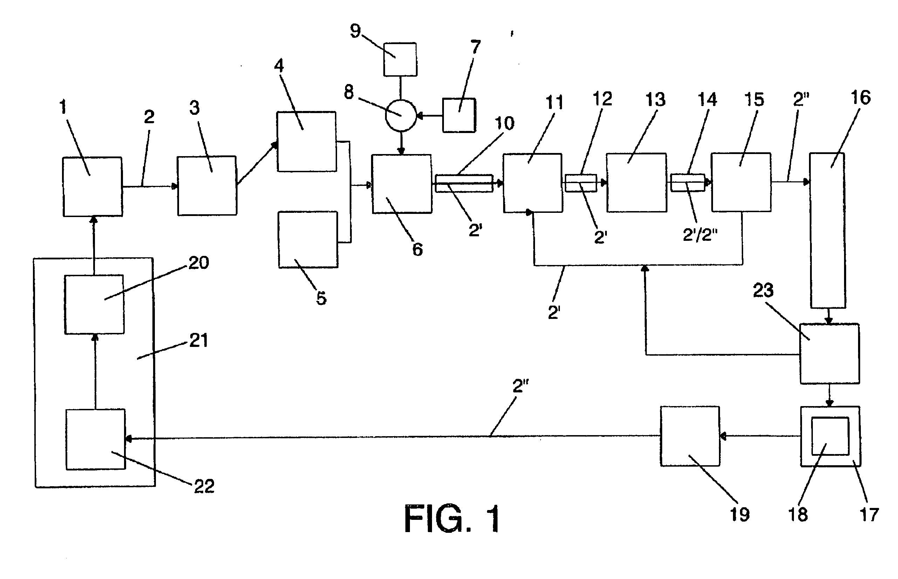

Figure 1 shows a schematic depiction of the improved process for recycling steel dusts object of the invention.

### Preferred Embodiment of the Invention

In view of the described and sole Figure 1, and according to the adopted numbering, a preferred embodiment of the invention can be seen therein, which comprises parts and elements which are indicated and described in detail below.

Thus, as seen in said Figure 1, the improved process for recycling steel dusts according to the invention consists firstly of dumping on a silo (3) the solid fraction, i.e., the dust (2) which is collected by the steel plant fume suction and purification system (1). From said silo (3), and by means of a pneumatic sending system, the material is transferred to the silo (4) of the briquette production plant which, in addition to said silo (4) for the dust material coming from the steel plant, has another silo (5) for coke fines, which will be the carbon-based reducer.

A metering system extracts the material from both silos (4) and (5) in the proportions established by the control system (750 kg/98 kg) and introduces it in the mixer (6) in which the water and the (polyalcohol-based) bonding agent (7) are furthermore added, which bonding agent is introduced by means of a high-pressure pump (8) in the flow of water (9) before its entrance in the mixer (6), said water (9) being heated at a temperature of between 40 and 60ºC.

The material remains for between 5 and 6 minutes in the mixer (6), said time being intended to initiate the reaction between the elements and, with the heat produced by the friction of the mixing blades, to further heat the material, reaching a temperature at its exit of between 70 and 90ºC.

Then, by means of a conveyor belt (10) the mixed material (2') is discharged to a hopper (11) acting as a regulation storage. The material is sent from said hopper (11), by means of another conveyor belt (12), to the press (13) forming the briquettes or briquetting machine, the size of such briquettes preferably being about 5 x 4 x 1.5 cm.

From this press (13), another conveyor belt (14) sends the already formed briquettes (2") and the material remains (2') to a sieve (15) which separates them, sending the remains (2') back to the regulation hopper (11).

The sieved briquettes (2") in turn pass through a maturation tunnel (16) consisting of a heated environment through which insufflated air at a temperature of between 80 and 100ºC is circulated, being passed after the exit from such tunnel through a second sieve (23) with an opening of 20% of the size of the briquette to discard those pieces which may have come off after the first sieving (15).

The briquettes (2") then pass to containers (17) in which, once full, unit heaters (18) are introduced and they are covered for a few hours. After this time has elapsed, the briquettes (2") are transferred to a storage (19) in which they are deposited while waiting to be used in the steel plant furnace (1).

When the level of the feed silo (20) for feeding the furnace (1) decreases, a truck is loaded with the briquettes (2") and they are taken to the additives storage (21), where they are dumped in a hopper (22), from which the distribution system takes them to their corresponding feed silo (20).

The addition system subsequently introduces them in the circuit for feeding additives to the furnace (1) and they are introduced therein together with lime (since it must be added to the furnace to scorify at that moment) after the melting scrap has spent a few minutes in the furnace (sufficient for the volume of fumes produced in the melting to have been considerably reduced).

Said fumes go to the fume purification system and are collected in the mentioned silo (3) at the beginning of the process, where the cycle begins again.

## Claims

1. Process for recycling steel dusts, consisting of the transfer of the dust (2) coming from the fume collection systems of an electric arc furnace (1) towards a silo (3) in which it settles and is metered together with a fine-grain carbon-based reducer so that its particles can spatially surround them upon being mixed with a polymerizable polyalcohol-based bonding agent (7) in a mixer (6) to which water is furthermore added, forming a gel film on the particles, the mixture obtained being pressed in a press (13) until achieving the suitable density for forming a briquette preferably of about 5 x 4 x 1.5 cm or any other shape, which after a curing phase can be reused by being dumped again in the furnace (1), characterised that, the bonding agent (7) is introduced by means of a high-pressure pump (8) in the flow of water (9) before its entrance in the mixer (6); and in that said water (9) is heated at a temperature of between 40 and 60ºC, the material remaining for between 5 and 6 minutes in the mixer (6), so that, with the heat produced by the friction of the mixing blades, the material is heated, reaching a temperature at its exit from said mixer of between 70 and 90°C, thereby improving the process for the reaction, maturation and curing of the briquettes (2").

2. Process for recycling steel dusts according to claim 1, **characterised by** the fact that at the exit of the press (13), a conveyor belt (14) sends the already formed briquettes (2") and the material remains (2') to a sieve (15) which separates them, sending the remains (2') back to the regulation hopper (11) provided before said press (13).

3. Process for recycling steel dusts according to claims 1 and 2, **characterised by** the fact that the sieved briquettes (2") pass through a maturation tunnel (16), consisting of a heated environment through which insufflated air at a temperature of between 80 and 100°C is circulated.

4. Process for recycling steel dusts according to claims 1 to 3, **characterised by** the fact that, at the exit of the maturation tunnel (16), the briquettes (2") are passed through a second sieve (23) with an opening of 20% of their size to discard those pieces that may have come off after the first sieving (15).

5. Process for recycling steel dusts according to claims 1 to 4, **characterised by** the fact that, after the second sieve (23), the briquettes (2") pass to containers (17) in which, once full, unit heaters (18) are introduced and they are covered for a few hours, being subsequently transferred to a storage (19) in which they are deposited while waiting to be used in the steel plant furnace (1), not being used before 24 hours.

## Patentansprüche

1. Prozess zum Recyceln von Stahlstaub,
aufweisend den Transfer des Staubs (2), welcher von den Staubabscheidersystemen eines elektrischen Lichtbogenofens (1) kommt, zu einem Silo (3), in welchem er sich absetzt und zusammen mit einem feinkörnigen auf Kohlenstoff basierenden Reduktionsmittel dosiert wird, so dass dessen Partikel sie räumlich umgeben können bei einem Mischen mit einem polymerisierbaren auf einem Polyalkohol basierenden Bindemittel (7) in einem Mischer (6), zu dem außerdem Wasser hinzugefügt wird, wobei ein Gelfilm an den Partikeln gebildet wird, wobei die erzeugte Mischung in einer Presse (13) gepresst wird, bis sie die geeignete Dichte zum Bilden eines Briketts erreicht, vorzugsweise von ungefähr 5 x 4 x 1,5 cm oder irgendeiner anderen Form, welches nach einer Aushärtungsphase wieder verwendet werden kann, indem es erneut in den Ofen (1) abgeladen wird,
**dadurch gekennzeichnet,**
**dass** das Bindemittel (7) mittels einer Hochdruckpumpe (8) in den Strom des Wassers (9) vor dessen Eintreten in den Mischer (6) eingeleitet wird und dass das Wasser (9) auf eine Temperatur zwischen 40 und 60°C erhitzt wird, wobei das Material für zwischen 5 und 6 Minuten in dem Mischer (6) verbleibt, so dass mit der Hitze, die durch die Reibung der Mischblätter erzeugt wird, das Material erhitzt wird, wobei es bei seinem Austreten aus dem Mischer eine Temperatur von zwischen 70 und 90°C erreicht, wodurch der Prozess des Reagierens, Reifens und Aushärtens der Briketten (2") verbessert wird.

2. Prozess zum Recyceln von Stahlstaub nach Anspruch 1,
**gekennzeichnet durch**
den Umstand, dass an dem Ausgang der Presse (13) ein Förderband (14) die bereits geformten Briketten (2") und die Materialüberreste (2') zu einem Sieb (15) befördert, welches sie trennt, wobei die Überreste (2') zurück zu dem Regulierungsmagazin (11) gesendet werden, welches vor der Presse (13) vorgesehen ist.

3. Prozess zum Recyceln von Stahlstaub nach den Ansprüchen 1 und 2,
**gekennzeichnet durch**
den Umstand, dass die gesiebten Briketten (2') einen Reifungstunnel (16) durchlaufen, der aus einer erwärmten Umgebung besteht, **durch** welche eingeblasene Luft bei einer Temperatur von zwischen 80 und 100°C zirkuliert wird.

4. Prozess zum Recyceln von Stahlstaub nach den Ansprüchen 1 bis 3,
**gekennzeichnet durch**
den Umstand, dass an dem Ausgang des Reifungstunnels (16) die Briketten (2") durch ein zweites Sieb (23) befördert werden, welches eine Öffnung von 20% von ihrer Größe hat, zum Aussondern solcher Teile, die sich nach dem ersten Sieben (15) gelöst haben können.

5. Prozess zum Recyceln von Stahlstaub nach den Ansprüchen 1 bis 4,
**gekennzeichnet durch**
den Umstand, dass nach dem zweiten Sieb (23) die Briketten (2") zu Containern (17) befördert werden, in welchen, wenn diese voll sind, Heizeinheiten (18) eingebracht werden und diese für einige Stunden bedeckt werden, wobei sie darauf zu einem Lager (19) transferiert werden, in welchem sie abgesetzt werden, während gewartet wird, dass sie in dem Stahlwerkofen (1) verwendet werden, wobei sie nicht vor 24 Stunden verwendet werden.

## Revendications

1. Procédé de recyclage de poussières d'acier selon lequel on transfère la poussière (2) provenant de systèmes de collecte des fumées d'un four à arc électrique (1) vers un silo (3) dans lequel elles se stabilisent et sont dosées avec un réducteur à base de carbone à grains fins de sorte que ses particules puissent les entourer dans l'espace par mélange avec un agent de liaison (7) à base de polyalcool polymérisable dans un mélangeur (6), dans lequel de l'eau est en outre ajoutée, on forme un film de gel sur les particules, on comprime le mélange obtenu dans une presse (13) jusqu'à ce qu'il ait atteint la densité adaptée pour former une briquette, de préférence d'environ 5 x 4 x 1, 5 cm, ou toute autre forme, qui, après une phase de polymérisation puisse être réutilisé en étant à nouveau déversée dans le four (1),
**caractérisé en ce que**
l'agent de liaison (7) est introduit au moyen d'une pompe haute pression (8) dans le flux d'eau (9) avant son entrée dans le mélangeur (6) et l'eau (9) est chauffée à une température comprise entre 40 et 60°C, le matériau restant pendant entre 5 et 6 minutes dans le mélangeur (6) de sorte que, avec la chaleur produite par la friction des pales de mélange, le matériau soit chauffé, en atteignant à sa sortie du mélangeur une température comprise entre 70 et 90°C améliorant ainsi le procédé de réaction, maturation et polymérisation des briquette (2").

2. Procédé de recyclage de poussières d'acier conforme à la revendication 1,
**caractérisé en ce qu'**
a la sortie de la presse (13) une courroie transporteuse (14) envoie les briquettes (2") déjà formées et le matériau résiduel (2') vers un tamis (15) qui les sépare en renvoyant le matériau résiduel (2') dans une trémie de régulation (11) montée en amont de la presse (13).

3. Procédé de recyclage de poussières d'acier conforme aux revendications 1 et 2,
**caractérisé en ce que**
les briquettes (2") tamisées passent dans un tunnel de maturation (16) constitué par un environnement chauffé au travers duquel on fait circu-1er de l'air insufflé à une température comprise entre 80 et 100°C.

4. Procédé de recyclage de poussières d'acier conforme aux revendications 1 à 3,
**caractérisé en ce qu'**
à leur sortie du tunnel de maturation (16) on fait passer les briquettes (2") au travers d'un second tamis (23) ayant une ouverture égale à 20 % de leur taille pour éliminer les pièces pouvant avoir pu passer après le premier tamis (15).

5. Procédé de recyclage de poussières d'acier conforme aux revendications 1 à 4,
**caractérisé en ce qu'**
après le second tamis (23) les briquettes (2") passent dans des conteneurs (17) dans lesquels, après qu'ils aient été remplis des éléments de chauffage unitaires (18) sont introduits et sont recouvertes pendant quelques heures puis transférées vers un stockage (19) dans lequel elles sont déposées en attendant d'être utilisées dans le four (1) de l'usine d'acier sans être utilisées avant 24 heures.
